Europäisches Patentamt

European Patent Office

Office européen des brevets

(19)

(11) Numéro de publication: **0 363 277**
**A2**

## (12) DEMANDE DE BREVET EUROPEEN

(21) Numéro de dépôt: **89402732.5**

(51) Int. Cl.5: **F16C 3/02**

(22) Date de dépôt: **03.10.89**

(30) Priorité: **07.10.88 FR 8813158**

(43) Date de publication de la demande:
**11.04.90 Bulletin 90/15**

(84) Etats contractants désignés:
**DE FR GB IT**

(71) Demandeur: **AEROSPATIALE SOCIETE NATIONALE INDUSTRIELLE**
**37, Boulevard de Montmorency**
**F-75016 Paris(FR)**

(72) Inventeur: **Lamalle, Jean**
**Résidence Muratel 98 Les Cèdres**
**F-33290 Blanquefort(FR)**

(74) Mandataire: **Lhuillier, René et al**
**ARMENGAUD JEUNE CABINET LEPEUDRY 6,**
**rue du Fg. St-Honoré**
**F-75008 Paris(FR)**

(54) **Dispositif antifouettement pour arbre de transmission de mouvement de rotation à hautes performances.**

(57) Deux sections de tubes intérieurs rigides 8 et 9 prennent appui sur une certaine longueur de la paroi intérieure rectiligne de l'arbre de tansmission 1 et dépassent légèrement le plan médian D du soufflet 3 prévu sur cet arbre. Un des tubes s'emboîte dans l'autre sur une partie de sa longueur et il est muni d'une dépression 11 et d'un renflement 12 introduisant dans la zone du plan médian D une possibilité de jeu entre les tubes emboîtés, à la façon d'une rotule.

Application aux arbres de transmission en matériau composite.

FIG.1

# Dispositif antifouettement pour arbre de transmission de mouvement de rotation à hautes performances.

L'invention qui se rapporte aux arbres de transmission de mouvement de rotation à hautes performances concerne plus précisément un dispositif antifouettement qui permet d'augmenter en toute sécurité les vitesses de rotation aujourd'hui atteintes avec des transmissions connues.

Les transmissions de mouvement de rotation sont aujourd'hui réalisées de façon répandue par des éléments métalliques du genre joints de cardan, ou par des éléments à accouplements élastiques qui sont, soit métalliques, soit incorporant des pièces en élastomères, ou encore par des éléments en matériau composite incluant des moyens autorisant une légère variation axiale ou angulaire entre les positions de l'organe moteur et de l'organe récepteur.

L'inconvénient majeur des éléments en matériaux métalliques avec ou sans élastomère est qu'ils représentent une certaine masse qui entraine une limitation de la fréquence critique, donc de la vitesse de rotation. Dès qu'il s'agit par conséquent d'utiliser des arbres de transmission à haute vitesse de rotation et soumis à des contraintes importantes, comme c'est le cas particulièrement en technique aéronautique, on préfère utiliser des transmissions en matériau composite du genre fibre de verre, kevlar ou carbone dont les caractéristiques de légèreté et les performances mécaniques ne sont plus à prouver.

Mais ces éléments en matériau composite doivent, comme on l'a souligné plus haut, pouvoir prendre en compte les défauts de positionnement des organes d'entraînement ou organes menants par rapport aux organes entraînés ou organes menés, ainsi que la transmission du couple-moteur.

Aussi plutôt que de prévoir dans ce but un joint articulé à chaque extrémité de l'arbre de transmission, on connaît la solution qui consiste à prévoir sur l'arbre une portion ondulée en forme de soufflet qui donne à l'extrémité du tube une certaine souplesse aussi bien axialement qu'en flexion. Le soufflet est également bobiné sur toute sa périphérie par des fibres inclinées sur l'axe du tube d'un angle déterminé par exemple entre 50° et 60°, et des nappes de fibre de renforcement peuvent être prévues pour renforcer la transmission au niveau du soufflet. Il n'en reste pas moins que cette zone de renflement, prévue pour absorber les défauts de positionnement, et qui présente par conséquent une relative souplesse, reste, malgré les renforcements d'enroulements dont elle est pourvue, une zone de faiblesse relative où se localisent la plupart des ruptures dès qu'une contrainte trop importante survient.

Or quand il y a une rupture d'un tel organe de transmission du mouvement rotatif, surtout à grande vitesse, l'arbre menant et l'arbre mené, libérés l'un de l'autre, s'écartent brutalement de leur axe sous l'effet de leur rotation, selon un débattement d'autant plus important que la vitesse est grande et peuvent alors provoquer des dégats considérables à la structure environnante.

La présente invention a donc pour but d'éviter la désolidarisation complète des arbres menant et mené en cas de rupture de l'organe de transmission du mouvement rotatif et propose à cet effet un dispositif antifouettement faisant que les arbres ne peuvent se déboîter lorsque en cas de rupture, l'un continue de tourner tandis que l'autre n'est plus entraîné.

Un objet de l'invention consiste en un dispositif antifouettement pour arbre de transmission de mouvement de rotation à hautes performances constitué d'un élément central rigide s'opposant au déboitement des deux parties d'un arbre en cas de rupture, élément logé à l'intérieur de l'arbre et au niveau d'une partie souple de celui-ci réalisée en forme de soufflet destiné à compenser les défauts de positionnement des organes d'entraînement et des organes entraînés de part et d'autre dudit arbre, dispositif selon lequel à la fois le corps tubulaire de l'arbre de transmission avec son soufflet et l'élément central rigide sont réalisés en matériau composite par enroulement filamentaire de fibres autres que métalliques, et selon lequel ledit élément central est constitué de deux sections de tubes intérieurs rigides prenant appui directement ou par l'intermédiaire de moyens de renforcement complémentaires sur une certaine longueur de la paroi intérieure rectiligne de l'arbre de transmission et chacun dépassant légèrement le plan médian du soufflet, l'un des tubes présentant en son extrémité une section un peu plus faible que la section de l'autre tube pour pouvoir s'emboîter dans ce dernier sur au moins une partie de sa longueur. De plus on prévoit des moyens complémentaires destinés à autoriser un jeu relatif entre les deux tubes intérieurs antifouet, compatible avec la déformation de l'arbre au niveau dudit soufflet.

Selon une caractéristique particulière de l'invention la partie terminale d'un tube antifouet qui s'emboîte dans l'autre tube antifouet, comporte une dépression annulaire suivie d'une partie sphérique, introduisant dans la zone du plan médian une possibilité de jeu entre les tubes emboîtés, à la façon d'une rotule.

Le tube rigide est réalisé par enroulement de tresses concentriques sur un mandrin rigide et sur une vessie gonflable dans la zone de sa partie sphérique, un moule supérieur présentant une configuration sphérique au droit de la vessie étant placé en superposition sur les tresses pour assurer la polymérisation du tube et la conformation de son extrémité après gonflage de la vessie ou encore le tube rigide est réalisé par enroulement de fibres sur un mandrin soluble conformé selon le profil de la dépression annulaire et de la partie sphérique recherchées

D'autres caractéristiques et avantages de l'invention apparaîtront à la lecture de la description suivante d'une forme de réalisation en référence aux dessins annexés qui représentent :

à la figure 1 une vue schématique en coupe d'une extrémité d'un arbre de transmission muni de son dispositif antifouettement ;

à la figure 2 une vue schématique à plus petite échelle d un arbre ainsi équipé.

à la figure 3 une vue en coupe montrant la réalisation d'un tube.

à la figure 4 une variante de réalisation aux figures 5 et 6, des vues à plus grande échelle montrant la position des tubes intérieurs lors de déformations du soufflet.

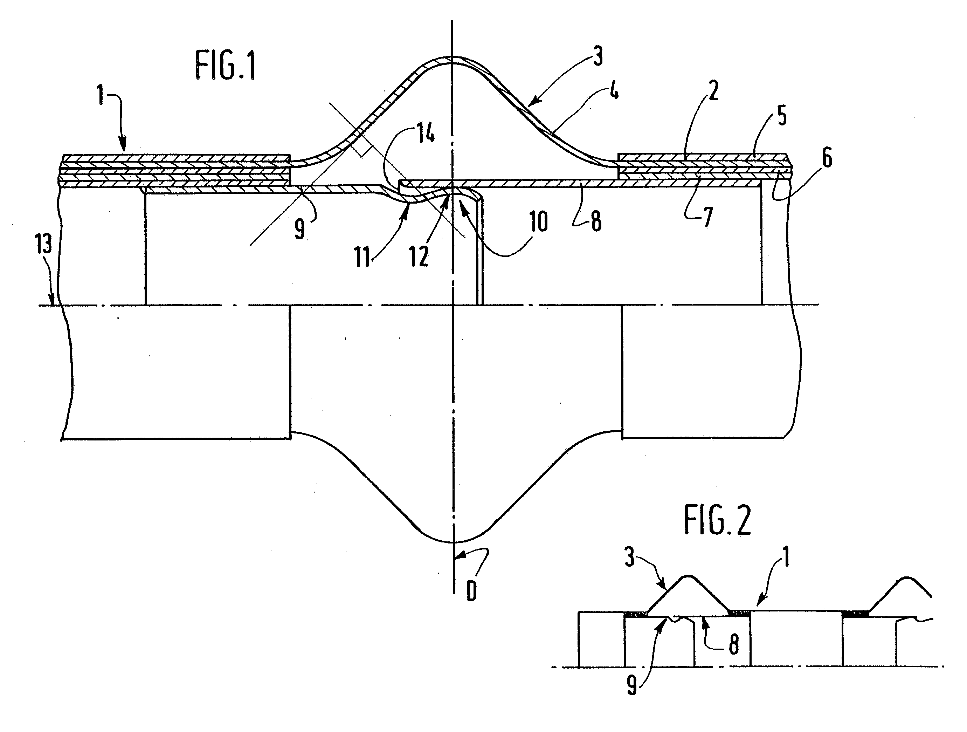

On a représenté à la figure 1 une section d'un arbre de transmission 1 du type réalisé en matière composite par bobinage direct. Le corps tubulaire de l'arbre d'axe 13 est réalisé à partir d'un enroulement de fibres par exemple de carbone avantageusement inclinées sur l'axe 13, et qui forme une couche repérée sous la référence 2. Au voisinage de chacune de ses extrémités, le corps tubulaire 2 présente une ondulation en forme de soufflet 3 dont le sommet au niveau du plan médian D se raccorde au tube par des flancs latéraux profilés 4. La partie de la couche 2 qui est rectiligne et qui forme le tube de l'arbre est manchonnée, extérieurement par un moyen de renforcement complémentaire constitué par un tube coaxial 5 en appui sur la face extérieure du tube, s'arrêtant à l'amorce du flanc 4, et intérieurement par un autre tube coaxial 6 en appui sur la face intérieure du tube, s'arrêtant également à l'amorce des flancs 4. Un manchon intérieur 7 supplémentaire de raidissage a été rajouté au tube intérieur 6 et se limite aussi au flanc 4. On notera que ces tubes et manchons sont prévus de part et d'autre du soufflet 3 et confèrent à l'arbre une résistance et une rigidité importante dans la zone correspondante, la zone du soufflet 3 étant par définition apte à encaisser les déformations dues aux défauts de positionnement des arbres menants et menés et à la transmission du couple-moteur.

D'un côté du soufflet 3 a été introduit à l'intérieur du manchon intérieur 7, une section de tube antifouet 8 rigide qui se prolonge un peu au delà du plan médian D du soufflet. Une autre section de tube rigide antifouet 9 est introduite de l'autre côté vis à vis de la première. Sa partie terminale 10 au niveau du plan médian D présente sur une partie de sa longueur une section un peu plus faible que la section du tube 8 pour pouvoir s'emboîter dans ce dernier. Avantageusement, cette partie terminale 10 comporte une dépression annulaire 11 suivie d'une partie sphérique 12 au niveau de l'extrémité du tube 8, conférant aux tubes emboîtés, dans la zone du plan médian D une possibilité de jeu de façon analogue à une rotule, nécessaire à la prise en compte des défauts de positionnement, sans apporter d'efforts parasites lors du fonctionnement normal du dispositif, ce jeu étant compatible avec la déformation de l'arbre au niveau du soufflet.

Les tubes 8 et 9 qui constituent les deux éléments du dispositif antifouettement sont réalisés de manière à éviter toute surépaisseur entraînant un surcroit de masse. Les deux tubes ont un diamètre extérieur identique ce qui permet de réaliser les manchons cylindriques du raccordement du soufflet de manière totalement symétrique par rapport au plan médian D dudit soufflet. On obtient ainsi une transmission dont l'inertie de masse est la mieux répartie.

Le tube 8 comporte une extrémité arrondie intérieure 14. Ce tube de conception simple est réalisé aisément en recouvrant un mandrin métallique de plusieurs tresses concentriques. Celles-ci sont imprégnées d'une résine, et le tout est polymérisé en étuve. Après retrait du mandrin le tube est mis à longueur par une opération de sciage et l'arrondi intérieur 14 est réalisé par meulage à la machine. On comprend que l'utilisation de tresses privilégie la direction des fibres dans le sens longitudinal ce qui favorise la tenue mécanique du tube en flexion longitudinale

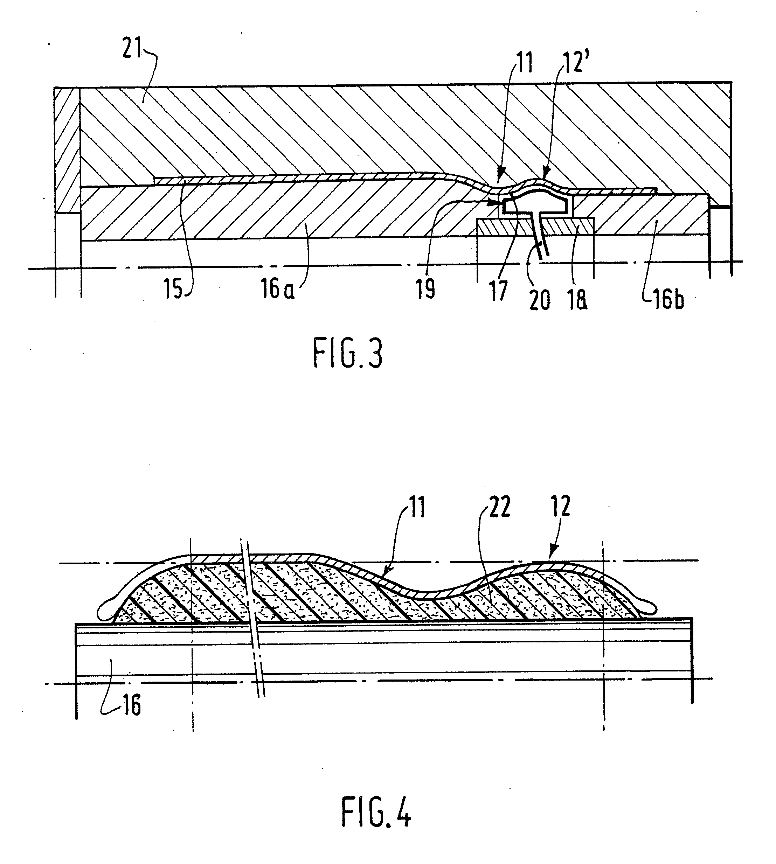

Comme indiqué précédemment, l'autre tube rigide 9 se termine par une partie sphérique 12 qui doit s'emboîter avec un jeu limité dans l'arrondi intérieur 14 du tube 8. La figure 3 illustre un mode de réalisation de ce tube 9. Au-dessus d'un mandrin 16 sont déposées des tresses concentriques 15 imprégnées de résine. Le mandrin est constitué d'une première partie 16a sur laquelle sera formée la partie rectiligne du tube 9, jusqu'à la dépression annulaire 11 et d'une partie d'extrémité 16b également rectiligne. Les deux parties de mandrin 16 sont écartées l'une de l'autre et ménagent entre elles une chambre annulaire 17 limitée vers l'axe longitudinal du mandrin par une couronne 18 sur laquelle est en appui une vessie gonflable 19, alimentée par un tube de pression 20.

Le mandrin 16 et la couronne 18 sont évidemment démontables. Un moule extérieur 21 présentant une configuration sphérique 12 au droit de la vessie 19 est alors placé en superposition sur les tresses. Après gonflage de la vessie et polymérisation du tube, le moule extérieur est démonté ainsi que le mandrin et la vessie rétractée. On procède alors au sectionnement du tube par sciage de son extrémité à la limite de la partie sphérique 12.

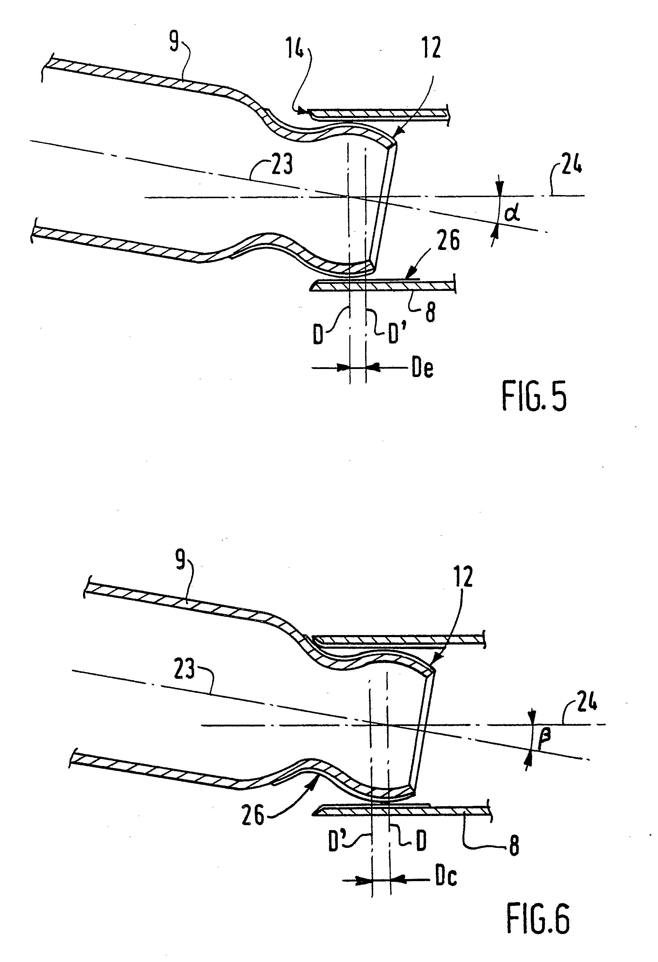

Selon une variante illustrée à la figure 4 on utilise un mandrin 16 supportant un mandrin soluble 22 constitué par exemple de sable et d'un liant, conformé selon le profil de la dépression annulaire 11 et de la partie sphérique 12. On peut bobiner directement les fibres sur ce profil et leur donner un angle de bobinage particulier par rapport à l'axe longitudinal du mandrin. Le creux 11 entre l'extrémité sphérique 12 et la partie courante du tube est en forme d'hyperboloïde de révolution ce qui garantit un contact permanent de la fibre sur le mandrin au cours du bobinage sans "pontage" entre les deux bosses. Ainsi l'angle de bobinage est choisi pour une raideur maximale du tube et en fonction de la valeur du creux imposé par les débattements angulaire et longitudinal du soufflet. En effet le soufflet peut subir une déformation en extension ou en compression, comme le montrent les figures 5 et 6.

La déformation en extension De est l'écart entre le plan médian nominal D du soufflet et le plan médian $D'$ du soufflet déformé (figure 5). Cette déformation entraîne le décalage de la partie sphérique 12 du tube 9 en direction de l'extérieur du tube 8 (vers la gauche). En outre l'axe de rotation 23 du tube 9 peut être désaligné de l'axe de rotation 24 du tube 8 d'un angle de désalignement $\alpha$ dont la limite angulaire est liée au débattement que peut prendre le tube 9 par rapport à l'arrondi intérieur 14 du tube 8.

La déformation en compression Dc est l'écart entre le plan nominal D du soufflet et le plan médian $D'$ du soufflet déformé (figure 6). Cette déformation entraîne le décalage de la partie sphérique 12 du tube 9 en direction de l'intérieur du tube 8 (vers la droite). En outre l'axe de rotation 23 du tube 9 peut être désaligné de l'axe de rotation 24 du tube 8 d'un angle de désalignement $\beta$ dont la limite angulaire est liée au débattement que peut prendre le tube 9 par rapport à l'arrondi intérieur 14 du tube 8. On conviendra que dans ce cas l'angle $\beta$ est notablement inférieur à l'angle $\alpha$ du cas précédent

Dans tous les cas les fibres peuvent être de toute nature (verre, carbone,...) et les liants choisis en fonction des tenues recherchées du matériau composite constituant les tubes 8 et 9.

On voit sur les figures 5 et 6 que les zones d'extrémité des tubes 8 et 9 qui risquent de venir en contact lors d'une éventuelle rupture de soufflet ou en cas de frottements aléatoires en fonctionnement normal de la transmission, sont avantageusement recouverts de polytétrafluoroéthylène 26, pour diminuer le coefficient de frottement et augmenter la longévité du dispositif.

Enfin on a représenté schématiquement à la figure 2 la forme d'un arbre de transmission 1 muni de ses soufflets 3 d'extrémité et renfermant le dispositif antifouettement 8-9 en question.

La partie formant l'arbre de transmission lui-même est réalisée par exemple par bobinage filamentaire direct. La géométrie et les épaisseurs des parois obtenues, précédemment énumérées, sont fonction des lois propres du bobinage. Il y a lieu évidemment de prévoir un arbre dont la structure et les caractéristiques soient adaptées aux tubes antifouets rapportés à l'intérieur.

## Revendications

1.- Dispositif antifouettement pour arbre de transmission de mouvement de rotation à hautes performances, constitué d'un élément central rigide s'opposant au déboîtement des deux parties d'un arbre en cas de rupture, élément logé à l'intérieur de l'arbre et au niveau d'une partie souple de celui-ci réalisée en forme de soufflet destiné à compenser les défauts de positionnement des organes d'entraînement et des organes entraînés de part et d'autre dudit arbre, caractérisé en ce que à la fois le corps tubulaire de l'arbre de transmission 1 avec son soufflet et l'élément central rigide sont réalisés en matériau composite par enroulement filamentaire de fibres autres que métalliques, et en ce que ledit élément central est constitué de deux sections de tubes intérieurs rigides (8) et (9) prenant appui directement ou par l'intermédiaire de moyens de renforcement complémentaires sur une certaine longueur de la paroi intérieure rectiligne de l'arbre de transmission et chacun dépassant légèrement le plan médian D du soufflet, l'un des tubes (9) présentant en son extrémité une section un peu plus faible que la section de l'autre tube (8) pour pouvoir s'emboîter dans ce dernier sur au moins une partie de sa longueur.

2.- Dispositif antifouettement selon la revendication 1, caractérisé en ce que l'on prévoit des moyens complémentaires (11, 12) destinés à autoriser un jeu relatif entre les deux tubes intérieurs antifouet, compatible avec la déformation de l'arbre au niveau dudit soufflet.

3.- Dispositif antifouettement selon la revendication 1, caractérisé en ce qu'un moyen de renforcement complémentaire de la partie rectiligne de l'arbre de transmission (1) est constitué d'un tube coaxial extérieur (5) et/ou d'un tube coaxial intérieur (6) s'arrêtant à l'amorce d'au moins un côté du flanc (4) du soufflet (3).

4.- Dispositif antifouettement selon les revendications 1 et 3, caractérisé en ce qu'un moyen de renforcement complémentaire de la partie rectiligne de l'arbre de transmission (1) est constitué d'un manchon intérieur de raidissage (7) coaxial au tube (6) et se limitant aussi au flanc (4) du soufflet (3).

5.- Dispositif antifouettement selon la revendication 1 caractérisé en ce que la partie terminale (10) d'un tube antifouet (9), qui s'emboîte dans l'autre tube antifouet (8), comporte une dépression annulaire (11) suivie d'une partie sphérique (12), introduisant dans la zone du plan médian D une possibilité de jeu entre les tubes emboîtés, à la façon d'une rotule.

6.- Dispositif antifouettement selon les revendications 1 et 5, caractérisé en ce que la partie sphérique (12) du tube antifouet (9) est décalée par rapport au tube (9) vers l'extérieur en cas de déformation en extension (De) du soufflet (3) ou vers l'intérieur en cas de déformation en compression (Dc) dudit soufflet.

7.- Dispositif antifouettement selon les revendications 1 et 5, caractérisé en ce que l'axe de rotation (23) du tube (9) est désaligné de l'axe de rotation (24) du tube (8) dans une limite angulaire ($\alpha$, $\beta$) liée au débattement que peut prendre un tube par rapport à l'autre.

8.- Dispositif antifouettement selon les revendications 1 à 5, caractérisé en ce que les zones d'extrémité des tubes (8 et 9) risquant de venir en contact sont recouvertes de polytétrafluoroéthylène.

9.- Dispositif antifouettement selon les revendications 1 à 5, caractérisé en ce que le tube rigide (9) est réalisé par dépose de tresses concentriques (15) sur un mandrin (16) rigide et sur une vessie gonflable (19) dans la zone de sa partie sphérique (12) et en ce que un moule extérieur (21) présentant une configuration sphérique (12') au droit de la vessie est placé en superposition sur les tresses pour assurer la polymérisation du tube et la conformation de son extrémité après gonflage de la vessie.

10.- Dispositif antifouettement selon la revendication 9, caractérisé en ce que la vessie gonflable est logée dans une chambre annulaire (17) ménagée entre deux parties écartées (16a) et (16b) du mandrin (16), laquelle chambre étant limitée vers l'axe longitudinal du mandrin par une couronne d'appui (18).

11.- Dispositif antifouettement selon les revendications 1 à 5, caractérisé en ce que le tube rigide (9) est réalisé par enroulement de fibres sur un mandrin soluble (22) conformé selon le profil de la dépression annulaire (11) et de la partie sphérique (12) recherchées.

FIG.1

1

3

4

14

2

5

6

7

9

11  12

10

8

13

D

FIG.2

3

1

8

9

EP 0 363 277 A2

FIG.3

FIG.4

FIG.5

FIG.6